# FASCICULE DE BREVET EUROPEEN

(11) **EP 4 107 398 B1**
(45) Date de publication et mention de la délivrance du brevet: **22.07.2026**
(21) Numéro de dépôt: 21710539.4
(22) Date de dépôt: 17.02.2021
(51) Int. Cl.: F04D 29/54, F04D 29/56, F01D 17/16, B64C 11/32, B64C 11/00, B64D 27/10

(54) **MODULE DE TURBOMACHINE EQUIPE DE SYSTEME DE CHANGEMENT DE PAS DES PALES D AUBES DE STATOR**
TURBOMASCHINENMODUL MIT EINEM VERSTELLMECHANISMUS FÜR LEITSCHAUFELN
TURBOMACHINE MODULE EQUIPPED WITH A MECHANISM FOR CHANGING THE PITCH OF STATOR BLADES

(30) Priorité: 19.02.2020 FR 2001674
(43) Date de publication de la demande: 28.12.2022
(73) Titulaire: SAFRAN AIRCRAFT ENGINES, 75015 Paris (FR)
(72) Inventeur: LIMA, Christophe, 77550 MOISSY-CRAMAYEL (FR)
(74) Mandataire: Gevers & Orès
(86) Numéro de dépôt international: PCT/FR2021/050282
(87) Numéro de publication internationale: WO 2021/165616

(56) Documents cités:
- FR-A1- 2 485 621
- FR-A1- 3 055 310
- FR-A1- 3 082 230
- US-A- 2 999 630
- US-A- 4 486 146
- US-A1- 2017 102 006

## Description

### Domaine de l'invention

La présente invention concerne le domaine des turbomachines et en particulier un module de turbomachine comprenant une hélice non carénée. Elle vise également la turbomachine correspondante.

### Arrière-plan technique

Des turbomachines comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour Unducted Single Fan). L'hélice ou les hélices formant la partie propulsive peu(ven)t être placée(s) à l'arrière du générateur de gaz (ou moteur) de sorte à être du type pousseur ou à l'avant du générateur de gaz de sorte à être du type tracteur. Ces turbomachines sont des turbopropulseurs qui se distinguent des turboréacteurs par l'utilisation d'une hélice à l'extérieur de la nacelle (non carénée) au lieu d'une soufflante interne. Cela permet d'augmenter le taux de dilution de façon très importante sans être pénalisé par la masse des carters ou nacelles destiné(e)s à entourer les pales de l'hélice ou soufflante. Des exemples de turbopropulseurs sont décrits dans les documents FR-A13082230 et US-A1-2017/102006.

Dans le cas des turbomachines avec une seule hélice non carénée et un redresseur, ce dernier peut être du type à calage variable de manière à améliorer les performances de la turbomachine, notamment d'un point de vue aérodynamique. Les aubes du redresseur sont orientées selon le besoin et phases de vol (décollage, croisière, atterrissage, etc.) Toutefois, l'intégration de moyens permettant le calage des pales du redresseur est une problématique en termes de masse, de trainée, d'encombrement et de complexité de ces moyens en fonction de l'architecture de la turbomachine.

### Résumé de l'invention

L'objectif de la présente invention est de fournir un module de turbomachine avec un système de changement de pas des pales d'un redresseur dont l'intégration est facilitée tout en évitant les modifications structurelles importantes.

Nous parvenons à cet objectif conformément à l'invention grâce à un module de turbomachine d'axe longitudinal X tel que défini dans la revendication 1, comportant, entre autres, une hélice non carénée entrainée en rotation autour de l'axe longitudinal et au moins un redresseur comprenant une pluralité d'aubes de stator à calage variable, non carénées, s'étendant suivant un axe radial perpendiculaire à l'axe longitudinal depuis un carter fixe, le module comprenant un premier système de changement des pas des pales des aubes de stator qui comprend :
- au moins un premier moyen de commande comportant un premier corps fixe relié au carter fixe et un premier corps mobile axialement par rapport au premier corps fixe,
- au moins un premier mécanisme de liaison reliant chaque aube de stator au premier corps mobile du premier moyen de commande, le premier mécanisme de liaison comprenant :
   ∘ un anneau de liaison, centré sur l'axe longitudinal, relié aux pieds de chaque aube de stator et
   ∘ au moins un levier relié d'une part, à l'anneau de liaison et d'autre part, au premier corps mobile du premier moyen de commande.

Ainsi, cette solution permet d'atteindre l'objectif susmentionné. En particulier, une telle configuration est simple à mettre en œuvre et permet de simplifier la cinématique du changement de pas des aubes de stator. En effet, avec le premier mécanisme de liaison, toutes les pales changent leurs orientations simultanément et sans faire intervenir de nombreux composants susceptibles de pénaliser la masse et de complexifier la cinématique.

Le module peut également comprendre l'une ou plusieurs des caractéristiques suivantes, prises seules ou en combinaison :
- le premier mécanisme de liaison comprend une pluralité de bras dont chacun est relié à une aube de stator et à l'anneau de liaison.
- chaque bras comprend une première extrémité qui est pourvue d'une liaison rotule traversée par un premier axe d'articulation porté par l'anneau de liaison et une deuxième extrémité reliée au pied d'une aube de stator suivant une liaison encastrement.
- le levier est maintenu par un support solidaire du carter fixe et est relié de manière pivotante au support.
- le premier système de changement de pas comprend deux premiers moyens de commande et deux leviers reliés respectivement aux premiers moyens de commande et à l'anneau de liaison.
- le premier système de changement de pas est installé dans un espace annulaire d'un carter externe délimitant en partie une veine primaire dans laquelle circule un flux d'air primaire.
- le carter externe porte un bec de séparation et les premiers moyens de commande sont agencés au niveau du bec de séparation.
- les aubes de stator sont configurées pour pivoter entre -10° et +10°.
- l'anneau de liaison est unique.
- les premiers axes d'articulation des bras sont disposés régulièrement autour de l'axe longitudinal X.
- le module comprend un deuxième système de changement de pas des pales mobiles de l'hélice qui comprend :
   ∘ un deuxième moyen de commande comportant un deuxième corps mobile axialement par rapport à un deuxième corps fixe monté sur un carter interne, les pales mobiles étant montées sur un carter rotatif porté par le carter interne,
   ∘ au moins un palier de transfert de charge comportant une bague interne reliée au deuxième corps mobile et une bague externe; et
   ∘ un deuxième mécanisme de liaison de la bague externe aux pales de l'hélice.
- le carter interne et le carter externe délimitent au moins en partie une veine primaire dans laquelle circule un flux d'air primaire.

L'invention concerne en outre une turbomachine d'aéronef comprenant au moins un module tel que susmentionné et un générateur de gaz destiné à entrainer l'hélice non carénée en rotation.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue schématique, en coupe axiale et partielle d'un exemple de turbomachine avec une seule hélice non carénée à laquelle s'applique l'invention ;
[Fig. 2] La figure 2 représente en perspective un système de changement de pas des pales des aubes de stator d'une turbomachine avec une seule hélice non carénée à laquelle s'applique l'invention ;
[Fig. 3] La figure 3 est une vue en coupe axiale et partielle d'un pied d'aube de stator de turbomachine auquel s'applique l'invention;
[Fig. 4] La figure 4 est une vue en perspective et partielle d'un système de changement de pas des aubes de stator d'une turbomachine avec une seule hélice non carénée selon l'invention ;
[Fig. 5] La figure 5 est une vue en coupe axiale d'un levier d'un mécanisme de liaison relié à une tige d'un corps mobile d'un moyen de commande selon l'invention ;
[Fig. 6] La figure 6 est une vue en coupe axiale d'un levier d'un mécanisme de liaison relié à un support et à un anneau de liaison selon l'invention ; et
[Fig. 7] La figure 7 illustre suivant une vue en perspective et en amont un exemple de système de changement de pas de pale d'aubes de stator agencé dans un carter fixe d'une turbomachine selon l'invention.

### Description détaillée de l'invention

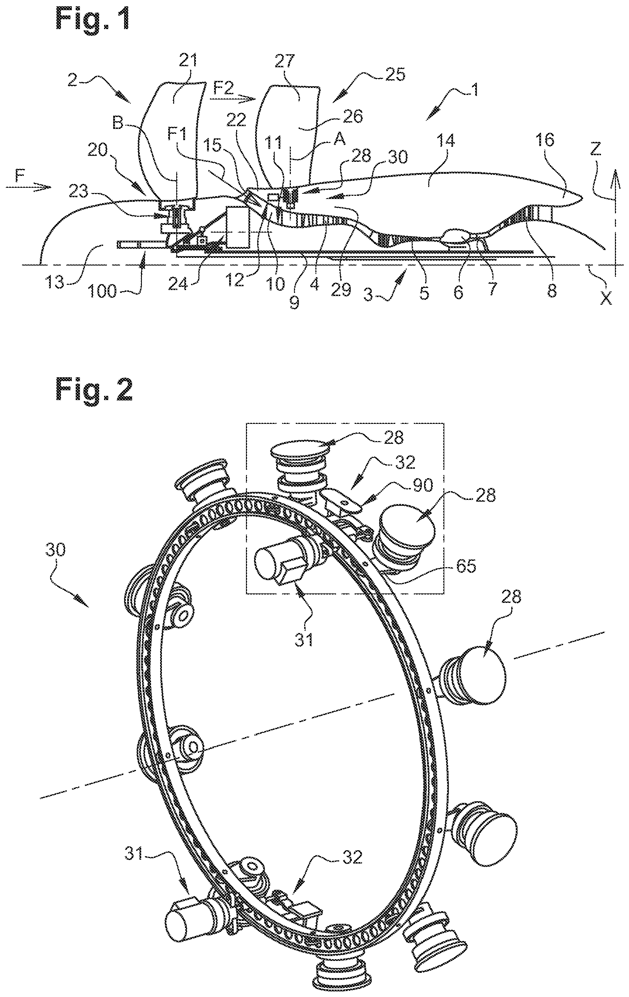

L'invention s'applique à une turbomachine 1 comprenant une hélice 2 non carénée destinée à être montée sur un aéronef. Une telle turbomachine est un turbopropulseur tel que représenté sur la figure 1. Cette turbomachine est connue sous l'expression anglaise « open rotor » ou « unducted fan » comme explicité précédemment.

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 1). De même, les termes « radial », « interne » et « externe » sont définis par rapport à un axe radial Z perpendiculaire à l'axe longitudinal X et au regard de l'éloignement par rapport à l'axe longitudinal X. Par ailleurs, les éléments identiques ou sensiblement identiques et/ou avec les mêmes fonctions sont représentés par les mêmes références numériques.

La turbomachine 1 comprend un générateur de gaz ou moteur 3 qui comporte typiquement d'amont en aval, un compresseur basse pression 4, un compresseur haute pression 5, une chambre de combustion 6, une turbine haute pression 7 et une turbine basse pression 8. Le compresseur basse pression 4 et la turbine basse pression 8 sont reliés mécaniquement par un arbre basse pression 9 de manière à former un corps basse pression. Le compresseur haute pression 5 et la turbine haute pression 7 sont reliés mécaniquement par un arbre haute pression de manière à former un corps haute pression. L'arbre haute pression s'étend à l'intérieur de l'arbre basse pression 9 et sont coaxiaux.

Dans une autre configuration non représentée, le corps basse pression ou de faible pression comprend le compresseur basse pression qui est relié à une turbine de pression intermédiaire. Une turbine libre de puissance est montée en aval de la turbine de pression intermédiaire et est reliée à l'hélice décrite ci-après via un arbre de transmission de puissance pour l'entraîner en rotation.

Un flux d'air primaire F1 circule dans une veine primaire 10 qui traverse le générateur de gaz 3. La veine primaire 10 est délimitée radialement par une paroi radialement interne 11 et une paroi radialement externe 12. La paroi radialement interne 11 est portée par un carter interne 13. La paroi radialement externe 12 est portée par un carter externe 14. Le flux d'air primaire F1 entre dans le générateur de gaz 3 par une entrée d'air annulaire 15 et s'en échappe par une tuyère primaire 16 qui est disposée en aval du générateur de gaz 3.

La turbomachine comprend un carter rotatif 20 centré sur l'axe longitudinal X et tournant autour de l'axe longitudinal X. Le carter rotatif 20 porte une couronne de pales 21 mobiles formant l'hélice 2. Le carter rotatif 20 est monté mobile par rapport au carter interne 13 qui le porte. Dans l'exemple représenté de la figure 1, l'hélice 2 est montée en amont du générateur de gaz (configuration de tracteur ou « pusher » en anglais). De manière alternative, l'hélice est montée en aval du générateur de gaz (configuration de pousseur ou « puller » en anglais). Le flux d'air F qui entre dans la turbomachine traverse les pales 21 de l'hélice pour former un flux d'air secondaire F2. Ce flux d'air secondaire circule autour du carter externe 14. Le flux d'air F se divise en un flux d'air primaire et en un flux d'air secondaire au niveau d'un bec de séparation 22 porté par le carter externe 14. Chaque pale 21 de l'hélice 2 comprend un pied 23 et s'étend radialement vers l'extérieur depuis le pied 23. Les pales des hélices ne sont pas carénées comme cela est représenté sur la figure 1 (la turbomachine représentée étant du type « USF », c'est-à-dire comme expliqué ci-avant, que celle-ci comprend une seule hélice non carénée et un redresseur comprenant plusieurs aubes de stator non carénées).

L'arbre de puissance ou l'arbre basse pression 9 (respectivement de la turbine libre de puissance et de la turbine basse pression) entraîne l'hélice 2 par l'intermédiaire d'un réducteur 24 qui comprime l'air à l'extérieur du carter externe 14 et fournit la majeure partie de la poussée. Le réducteur 24 peut être de type à train planétaire ou à train épicycloïdal. Comme nous pouvons le voir sur la figure 1 également, la turbomachine 1 comprend un redresseur 25 comprenant une pluralités d'aubes de stator 26 (ou aubes fixes) connues sous l'acronyme anglais « OGV » pour Outlet Guide Vane. Les aubes de stator 26 sont réparties régulièrement autour de l'axe longitudinal X et s'étendent radialement dans le flux d'air secondaire. Les aubes de stator 26 sont portées par une structure fixe solidaire du carter externe 14. En particulier, chaque aube de stator 26 comprend une pale 27 qui s'étend radialement depuis un pied 28. Nous comprenons que les aubes de stator 26 sont non carénées.

Sur la figure 2, dix aubes de stators 26 sont montées sur le carter externe 14. Les aubes de stator 26 sont à calage variable de manière à optimiser la performance de la turbomachine. A cet effet, la turbomachine comprend un premier système de changement de pas 30 des pales des aubes de stator. Sur la figure 2, le premier système de changement de pas 30 comprend au moins un premier moyen de commande 31 et au moins un premier mécanisme de liaison 32 reliant chaque aube de stator 26 au premier moyen de commande 31.

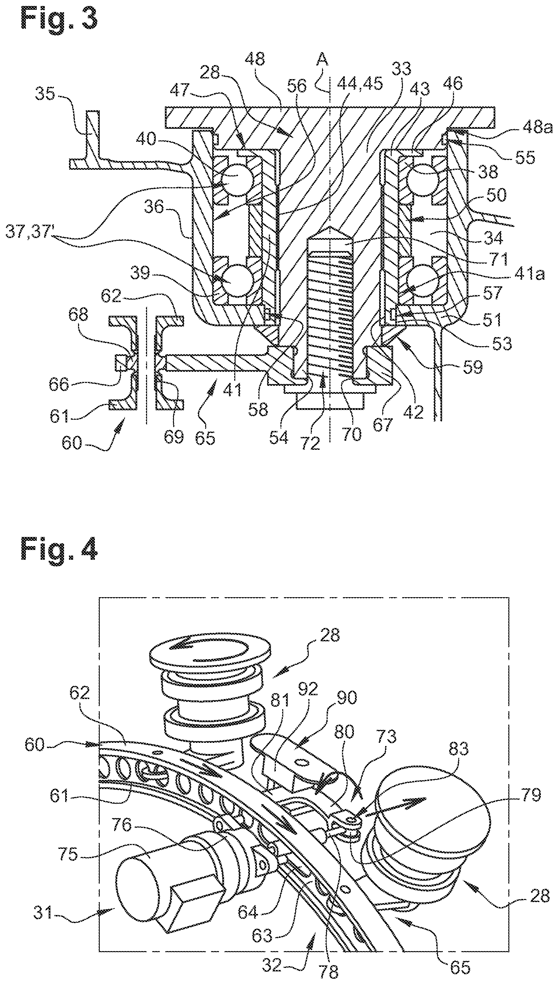

La figure 3 représente une vue en coupe axiale d'un pied 28 d'aube de stator 26. Typiquement, le pied 28 se présente sous la forme d'un pivot 33 qui est monté pivotant suivant un axe A dans un logement 34. En particulier, une virole 35 annulaire centrée sur l'axe longitudinal X comprend une pluralité de logements 34 répartis sur sa circonférence. La virole 35 annulaire est solidarisée au carter externe 14. Chaque logement 34 est délimité par une jupe cylindrique 36 s'étendant suivant l'axe radial Z. Le pivot 33 du pied est monté pivotant grâce à au moins un palier de guidage 37. Dans le présent exemple, deux paliers de guidage 37, 37' se superposent suivant l'axe radial Z. Ces paliers 37 sont de préférence, mais non limitativement, des paliers à roulements.

Chaque palier 37, 37' comprend une bague interne 38 solidaire en rotation du pivot 33 et une bague externe 39 qui entoure la bague interne 38. Les roulements sont installés entre les surfaces internes des bagues interne et externe 38, 39 qui forment des pistes de roulement. Les roulements comprennent ici des billes 40.

Une douille 41 cylindrique est installée dans chaque logement 34 de manière à relier la bague interne 38 de chaque palier 37, 37' au pied de chaque aube de stator 26. La douille 41 est centrée sur l'axe de calage A des aubes de stator. Chaque douille 41 s'étend entre une première extrémité 42 et une deuxième extrémité 43. Chaque douille 41 est dotée de cannelures internes 44 agencées sur une face cylindrique interne. Les cannelures internes 44 sont destinées à s'accoupler avec des cannelures externes 45 prévues sur une surface externe du pivot 33 de chaque pied d'aube de stator 26. La deuxième extrémité 43 de la douille 41 comprend une collerette 46 qui s'étend radialement vers l'extérieur du corps (cylindrique) de la douille 41 par rapport à l'axe A. La collerette 46 forme une surface radialement externe 47 sur laquelle repose une embase 48 du pivot 33. La bague externe 39 de chaque palier 37 , 37' est portée par la virole 35, en particulier la jupe cylindrique 36. Entre chaque palier s'étend suivant l'axe radial Z une entretoise 50 destinée à maintenir une distance (ici radiale) entre les deux paliers 37, 37'. Cette entretoise 50 est placée avantageusement, mais non limitativement, entre deux bagues internes 38 des paliers 37, 37'.

La virole 35 comprend également une paroi de fond 51 annulaire solidaire de la jupe cylindrique 36. La paroi de fond comprend des trous 53 qui la traversent de part et d'autre suivant l'axe radial et permettant le passage de l'extrémité libre 54 du pivot 33.

Des éléments d'étanchéités sont agencés dans chaque logement 34 de manière à prévenir la fuite de lubrifiant des paliers vers l'extérieur du logement. En particulier, un premier joint d'étanchéité 55 annulaire est agencé entre une surface interne 56 de la jupe cylindrique 36 et une bordure périphérique 48a de l'embase 48. Un deuxième joint d'étanchéité 57 est prévu entre une bordure interne 58 d'un trou 53 et une surface externe 41a de la douille 41.

Enfin, afin d'éviter tout déplacement du pivot 33 suivant l'axe radial, un élément de maintien 59 permet de fixer l'extrémité libre 54 du pivot sur la paroi de fond 51 de la virole 35. L'élément de maintien 59 comprend un écrou. D'autres éléments analogues filetés permettant de fixer le pivot sur la virole sont envisageables bien entendu.

En référence aux figures 3 et 4, le premier mécanisme de liaison 32 comprend un anneau de liaison 60 qui est centré sur l'axe longitudinal X. L'anneau de liaison 60 comprend un premier segment 61 annulaire et un deuxième segment 62 annulaire concentriques et coaxiales. Les premier et deuxième segments 61, 62 sont espacés radialement et sont reliés l'un à l'autre par des ponts 63 qui forment des ouvertures traversantes 64 suivant l'axe longitudinal X. L'anneau de liaison 60 est relié aux pieds de chaque aube de stator.

Pour cela, le premier mécanisme de liaison 32 comprend au moins un bras 65 relié d'une part, à l'anneau de liaison 60 et d'autre part, au pied 28 d'une aube 26. Le bras 65 s'étend entre une première extrémité 66 et une deuxième extrémité 67. La première extrémité 66 est pourvue d'une rotule 68 (cf. figure 3) qui est traversée par un axe d'articulation 69 porté par l'anneau de liaison 60. L'axe d'articulation 69 est monté entre le premier segment 61 et le deuxième segment 62 et est parallèle à l'axe radial Z. La deuxième extrémité 67 est reliée au pied 28 d'une aube stator 26 suivant une liaison encastrement. Comme cela est visible sur la figure 3, la deuxième extrémité 67 comprend un orifice 70 qui traverse celle-ci de part et d'autre suivant l'axe radial. L'extrémité libre 54 de chaque pivot est montée dans chaque orifice 70. De manière avantageuse, mais non limitativement, le pivot 33 comprend un alésage radial 71 qui débouche au niveau de l'extrémité libre 54 de celui-ci. Un organe de fixation 72 tel qu'une vis est reçu dans l'alésage radial 71 pour fixer le bras 65 sur le pied de l'aube de stator 26. Dans l'exemple représenté, il y a autant de bras que d'aubes de stator. Et chaque bras est relié à un pied d'aube et à l'anneau de liaison 60.

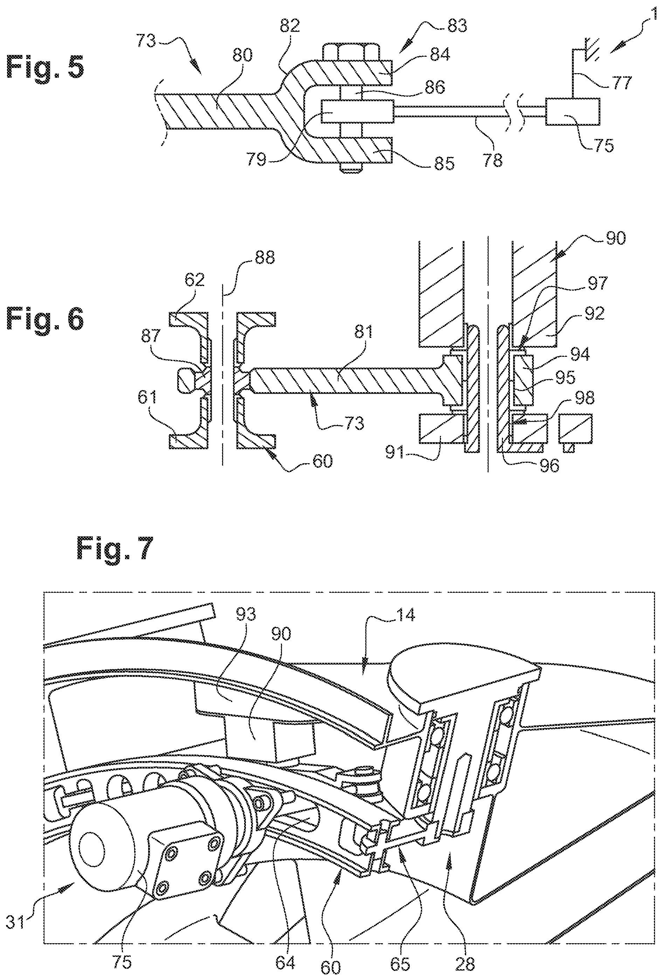

En référence aux figures 4 et 5, le premier mécanisme de liaison 32 comprend également au moins un levier 73 qui est relié d'une part, à l'anneau de liaison 60 et d'autre part, au premier moyen de commande 31.

Dans cet exemple, il y a deux premiers moyens de commande 31 et deux leviers 73 qui coopèrent entre eux. Les deux premiers moyens de commande 31 permettent de transmettre les efforts à l'anneau de liaison 60 et le changement des pas des pales des aubes de stator 26. Les premiers moyens de liaison sont diamétralement opposés par rapport à l'axe de l'anneau de liaison 60.

Chaque premier moyen de commande 31 comprend un premier corps fixe 75 et un premier corps mobile 76 par rapport au premier corps fixe. Chaque premier corps fixe 75 est relié à une virole fixe 77 (cf. figure 5) de la turbomachine de manière à être immobile en translation et en rotation. La virole fixe 77 est en particulier montée sur le carter externe 14. Chaque premier corps mobile 76 se déplace en translation axialement par rapport au premier corps fixe 75 respectif suivant l'axe longitudinal X. Chaque premier corps mobile 76 comprend une tige axiale 78 dont son extrémité libre 79 est reliée à un levier 73.

Chaque levier 73 présente une forme en L avec une première branche 80 et une deuxième branche 81 reliée entre elles. Sur la figure 5, la première branche 80 comprenant à une première extrémité distale 82 (cf. figure 4) une chape 83. Cette dernière comprend, suivant la figure 5, une première oreille 84 et une deuxième oreille 85 superposées et espacées suivant l'axe radial. Les première et deuxième oreilles 84, 85 s'étendent dans des plans sensiblement parallèles entre eux. Un arbre d'articulation 86 s'étend suivant un axe parallèle à l'axe radial entre les première et deuxième oreilles. L'extrémité libre 79 de la tige axiale 78 comprend un œillet traversé par l'arbre d'articulation 86 de manière à réaliser une liaison pivot.

Sur la figure 6, la deuxième branche 81 comprend une rotule 87 qui est traversée par un deuxième axe d'articulation porté par l'anneau de liaison 60. Le deuxième axe d'articulation est monté entre le premier segment 61 et le deuxième segment 62 et est parallèle à l'axe radial Z.

En référence à la figure 6, le levier 73 est monté sur un support 90 qui est solidaire de la structure fixe de la turbomachine. La structure fixe est solidaire du carter externe 14. Le support 90 permet de maintenir le levier 73 par rapport au carter externe 14. En particulier, au niveau de la jonction entre la première branche 80 et la deuxième branche 81, le levier 73 est relié au support 90 suivant une liaison pivot. Comme nous pouvons le voir sur la figure 4, le support comprend une semelle 91 qui est reliée à un corps principal 92. Le corps principal est fixé à la structure fixe 93 solidaire du carter externe de la turbomachine. La fixation est réalisée au moyen d'organe de fixation tel que des vis et écrous. La semelle 91 s'étend dans un plan qui est perpendiculaire à l'axe radial et parallèle au plan dans lequel est défini le corps principal. La semelle 91 forme un C ou un U avec le corps principal 92. L'espace entre la semelle 91 et le corps principal 92 reçoit un sommet 94 du levier 73 défini par la jonction des première et deuxième branches. Le sommet 94 est traversé par un orifice 95 suivant un axe radial. Un organe de pivotement 96 porté par le corps principal et la semelle 91 traverse l'orifice du levier et s'étend suivant un axe radial Z. Un coussinet supérieur 97 et un coussinet inférieur 98 sont agencés dans l'orifice 95. L'organe de pivotement traverse les coussinets 97, 98.

Chaque levier 73 présente alors trois axes de rotation.

Avantageusement, les premiers moyens de commande sont chacun un vérin hydraulique comprenant le corps fixe et le corps mobile. Chaque premier moyen de commande est relié à une source d'alimentation fluidique pour alimenter en huile sous pression des chambres (non représentées) du corps fixe. Le corps mobile s'étend à l'intérieur du corps fixe.

Avantageusement, le système de changement de pas est agencé dans un espace annulaire 29 défini dans le carter externe 14. Chaque premier moyen de commande est agencé au niveau du bec de séparation 22 comme cela est représenté sur la figure 1. En particulier, chaque premier moyen de commande est agencé en amont des pieds 28 des aubes de stator et également en amont de l'anneau de liaison 60.

La tige axiale 78 de chaque corps mobile traverse une ouverture traversante 64 définie dans l'anneau de liaison 60.

Nous allons maintenant présenter la cinématique des différents organes lors du changement de pas des pales des aubes de stator. Toutes les pales des aubes de stator 26 pivotent simultanément. Lorsqu'un premier corps mobile 76 d'un premier moyen de commande 31 se déplace en translation suivant l'axe longitudinal, l'extrémité libre 79 de la tige axiale 78 de ce premier corps mobile 76 se déplace également en translation suivant l'axe X et entraîne la rotation d'un levier 73 auquel il est relié par rapport au support. Ce levier 73 qui est relié également à l'anneau de liaison 60 entraîne en rotation l'anneau de liaison 60 autour de l'axe longitudinal qui génère le changement de pas des pales des aubes de stator 26 reliées à l'anneau de liaison 60 via les bras 65. De la sorte, avec une translation du premier corps mobile des vérins et une rotation des leviers 73 reliés à l'unique anneau de liaison 60, toutes les pales des aubes de stator 26 changent leurs pas ou leur orientation. Les pales des aubes de stator 26 pivotent entre -10° et +10°.

Le module de turbomachine peut comprendre un deuxième système de changement de pas 100 des pales mobiles de l'hélice 2. Ce deuxième système de changement de pas est agencé en amont du générateur de gaz 3 et en-dessous radialement des pieds des pales 21 mobiles de l'hélice 2. Ce système de changement de pas 100 comprend un deuxième moyen de commande comportant un deuxième corps mobile axialement par rapport à un deuxième corps fixe monté sur le carter interne 13. Le système de changement de pas comprend également au moins un palier de transfert de charge comportant une bague interne reliée au deuxième corps mobile et une bague externe, ainsi qu'un deuxième mécanisme de liaison de la bague externe aux pales mobiles de l'hélice. Le système de changement de pas des pales de l'hélice 2 permet de faire varier le calage ou le pas des pales 21 autour de leurs axes de calage de sorte qu'elles occupent différentes positions angulaires selon les conditions de fonctionnement de la turbomachine et les phases de vol concernées telles qu'une position extrême de travail (position d'inversion de poussée connue en anglais sous le terme « reverse ») et une position extrême de mise en drapeau des pales. Le deuxième moyen de commande est également un vérin hydraulique comprenant le deuxième corps fixe et le deuxième corps mobile. Le mécanisme de liaison comprend ici des bielles.

## Revendications

1. Module de turbomachine d'axe longitudinal X, comportant une hélice (2) non carénée entrainée en rotation autour de l'axe longitudinal X, au moins un redresseur (25) comprenant une pluralité d'aubes de stator (26) à calage variable, non carénées, s'étendant suivant un axe radial Z perpendiculaire à l'axe longitudinal X depuis un carter fixe, et un premier système de changement des pas (30) des pales des aubes de stator (26) qui comprend :
- au moins un premier moyen de commande (31) comportant un premier corps fixe (75) relié au carter fixe et un premier corps mobile (76) axialement par rapport au premier corps fixe (75),
- au moins un premier mécanisme de liaison (32) reliant chaque aube de stator (26) au premier corps mobile (76) du premier moyen de commande (31), le premier mécanisme de liaison (32) comprenant
∘ un anneau de liaison (60), centré sur l'axe longitudinal, relié aux pieds (28) de chaque aube de stator et,
∘ au moins un levier (73) relié d'une part, à l'anneau de liaison (60) et d'autre part, au premier corps mobile (76) du premier moyen de commande (31), le levier (73) présentant une forme en L avec une première branche (80) et une deuxième branche (81) comprenant respectivement une première et une deuxième extrémité distales (82), la première extrémité distale (82) de la première branche (80) étant reliée suivant une liaison pivot, d'axe parallèle à l' axe radial Z, avec une tige axiale (78) du premier corps mobile (76) du premier moyen de commande (31),
**caractérisé en ce que** et la deuxième extrémité distale de la deuxième branche (81) comprend une rotule (87) traversée par un deuxième axe d'articulation (88) parallèle à l'axe radial Z, porté par l'anneau de liaison (60), la tige axiale (78) du premier corps mobile (76) traversant une ouverture traversante (64) suivant l'axe longitudinal X définie dans l'anneau de liaison (60), l'ouverture traversante (64) étant formée par des ponts (63) reliant l'un à l'autre un premier segment (61) annulaire et un deuxième segment (62) annulaire de l'anneau de liaison (60), lesdits segments (61, 62) étant concentriques, coaxiaux et espacés radialement.

2. Module selon la revendication précédente, **caractérisé en ce que** le premier mécanisme de liaison (32) comprend une pluralité de bras (65) dont chacun est relié à une aube de stator (26) et à l'anneau de liaison (60).

3. Module selon la revendication précédente, **caractérisé en ce que** chaque bras (65) comprend une première extrémité qui est pourvue d'une liaison rotule (68) traversée par un premier axe d'articulation (69) porté par l'anneau de liaison (60) et une deuxième extrémité reliée au pied (28) d'une aube de stator (26) suivant une liaison encastrement.

4. Module selon l'une des revendications précédentes, **caractérisé en ce que** le levier (73) est maintenu par un support (90) solidaire du carter fixe et est relié de manière pivotante au support (90).

5. Module selon l'une quelconque des revendications précédentes, **caractérisé en ce que** le premier système de changement de pas (30) comprend deux premiers moyens de commande (31) et deux leviers (73) reliés respectivement aux premiers moyens de commande (31) et à l'anneau de liaison (60).

6. Module selon l'une quelconque des revendications précédentes, **caractérisé en ce que** le premier système de changement de pas (30) est installé dans un espace annulaire (29) d'un carter externe (14) délimitant en partie une veine primaire (10) dans laquelle circule un flux d'air primaire.

7. Module selon la revendication précédente, **caractérisé en ce que** le carter externe (14) porte un bec de séparation (22) et les premiers moyens de commande (31) sont agencés au niveau du bec de séparation (22).

8. Module selon l'une quelconque des revendications précédentes, **caractérisé en ce que** les aubes de stator (26) sont configurées pour pivoter entre -10° et +10°.

9. Module selon l'une quelconque des revendications précédentes, **caractérisé en ce que** l'anneau de liaison (60) est unique.

10. Module selon l'une quelconque des revendications précédentes, **caractérisé en ce que** le module comprend un deuxième système de changement de pas (100) des pales mobiles de l'hélice (2) qui comprend :
- un deuxième moyen de commande comportant un deuxième corps mobile axialement par rapport à un deuxième corps fixe monté sur un carter interne (13), les pales (21) mobiles étant montées sur un carter rotatif (20) porté par le carter interne (13),
- au moins un palier de transfert de charge comportant une bague interne reliée au deuxième corps mobile et une bague externe; et
- un deuxième mécanisme de liaison de la bague externe aux pales de l'hélice.

11. Module selon la revendication précédente, **caractérisé en ce que** le carter interne (13) et le carter externe (14) délimitent au moins en partie une veine primaire (10) dans laquelle circule un flux d'air primaire.

12. Turbomachine (1) d'aéronef comprenant au moins un module selon l'une quelconque des revendications précédentes et un générateur de gaz (3) destiné à entrainer l'hélice (2) non carénée en rotation.

## Patentansprüche

1. Turbotriebwerksmodul mit einer Längsachse X, das einen um die Längsachse X drehenden nicht ummantelten Propeller (2), mindestens einen Strömungsrichter (25), der eine Vielzahl von nicht ummantelten Statorschaufeln (26) mit variabler Feststellposition umfasst, die sich entlang einer radialen Achse Z senkrecht zur Längsachse X aus einem festen Gehäuse heraus erstrecken, und ein erstes Anstelländerungssystem (30) der Statorschaufeln (26) beinhaltet, umfassend:
- mindestens ein erstes Steuermittel (31), das einen ersten festen Körper (75) beinhaltet, der mit dem festen Gehäuse verbunden ist, und einen ersten beweglichen Körper (76), der in Bezug zum ersten festen Körper (75) axial ist,
- mindestens einen ersten Verbindungsmechanismus (32), der jede Statorschaufel (26) mit dem ersten beweglichen Körper (76) des ersten Steuermittels (31) verbindet, wobei der erste Verbindungsmechanismus (32) umfasst
- einen Verbindungsring (60), der auf der Längsachse zentriert ist, der mit den Füßen (28) einer jeden Statorschaufel verbunden ist und,
- mindestens einen Hebel (73), der einerseits mit dem Verbindungsring (60) und andererseits mit dem beweglichen Körper (76) des ersten Steuermittels (31) verbunden ist,
wobei der Hebel (73) eine L-Form mit einem ersten Zweig (80) und einem zweiten Zweig (81) aufweist, die jeweils ein erstes und ein zweites distales Ende (82) umfassen, wobei das erste distale Ende (82) des ersten Zweigs (80) entsprechend einer Schwenkverbindung, mit einer Achse parallel zur radialen Achse Z, mit einer axialen Stange (78) des ersten beweglichen Körpers (76) des ersten Steuermittels (31) verbunden ist,
**dadurch gekennzeichnet, dass** das zweite distale Ende des zweiten Zweigs (81) ein Kugelgelenk (87) umfasst, das durch eine zweite Gelenkachse (88) parallel zur radialen Achse Z durchquert wird, die vom Verbindungsring (60) getragen wird, wobei die axiale Stange (78) des ersten beweglichen Körpers (76) eine Durchgangsöffnung (64) entlang der Längsachse X durchquert, die im Verbindungsring (60) definiert ist, wobei die Durchgangsöffnung (64) durch Brücken (63) gebildet ist, die ein erstes ringförmiges Segment (61) und ein zweites ringförmiges Segment (62) des Verbindungsrings (60) miteinander verbindet, wobei die Segmente (61, 62) konzentrisch, koaxial und radial beabstandet sind.

2. Modul nach dem vorstehenden Anspruch, **dadurch gekennzeichnet, dass** der erste Verbindungsmechanismus (32) eine Vielzahl von Armen (65) umfasst, von denen jeder mit einer Statorschaufel (26) und mit dem Verbindungsring (60) verbunden ist.

3. Modul nach dem vorstehenden Anspruch, **dadurch gekennzeichnet, dass** jeder Arm (65) ein erstes Ende umfasst, das mit einer Kugelgelenkverbunden (68) versehen ist, die von einer ersten Gelenkachse (69) durchquert wird, die von dem Verbindungsring (60) getragen wird, und ein zweites Ende, das mit dem Fuß (28) einer Statorschaufel (26) gemäß einer Einbettungsverbindung verbunden ist.

4. Modul nach einem der vorstehenden Ansprüche, **dadurch gekennzeichnet, dass** der Hebel (73) von einer Stütze (90) festgehalten wird, die fest mit dem festen Gehäuse verbunden ist und schwenkbar mit der Stütze (90) verbunden ist.

5. Modul nach einem der vorstehenden Ansprüche, **dadurch gekennzeichnet, dass** das erste Anstelländerungssystem (30) zwei erste Steuermittel (31) und zwei Hebel (73) umfasst, die jeweils mit den ersten Steuermitteln (31) und mit dem Verbindungsring (60) verbunden sind.

6. Modul nach einem der vorstehenden Ansprüche, **dadurch gekennzeichnet, dass** das erste Anstelländerungssystem (30) in einem Ringraum (29) eines äußeren Gehäuses (14) installiert ist, das teilweise eine Primärstrombahn (10) begrenzt, in der ein Primärluftstrom zirkuliert.

7. Modul nach dem vorstehenden Anspruch, **dadurch gekennzeichnet, dass** das äußere Gehäuse (14) einen Trennfortsatz (22) trägt, und die ersten Steuermittel (31) im Bereich des Trennfortsatzes (22) angeordnet sind.

8. Modul nach einem der vorstehenden Ansprüche, **dadurch gekennzeichnet, dass** die Statorschaufeln (26) konfiguriert sind, um zwischen -10° und +10° zu schwenken.

9. Modul nach einem der vorstehenden Ansprüche, **dadurch gekennzeichnet, dass** der Verbindungsring (60) einmalig ist.

10. Modul nach einem der vorstehenden Ansprüche, **dadurch gekennzeichnet, dass** das Modul ein zweites Anstelländerungsssystem (100) der beweglichen Propellerblätter (2) umfasst, umfassend:
- ein zweites Steuermittel, das einen zweiten beweglichen Körper beinhaltet, der in Bezug zu einem zweiten festen Körper, der auf einem inneren Gehäuse (13) montiert ist, axial ist, wobei die beweglichen Blätter (21) auf einem Drehgehäuse (20) montiert sind, das von dem inneren Gehäuse (13) getragen wird,
- mindestens ein Lager zur Lastübertragung, das einen inneren Ring, der mit dem zweiten beweglichen Körper verbunden ist, und einen äußeren Ring beinhaltet; und
- einen zweiten Verbindungsmechanismus des äußeren Rings mit den Blättern des Propellers.

11. Modul nach dem vorstehenden Anspruch, **dadurch gekennzeichnet, dass** das innere Gehäuse (13) und das äußere Gehäuse (14) mindestens teilweise eine Primärstrombahn (10) begrenzen, worin ein Primärluftstrom zirkuliert.

12. Turbotriebwerk (1) eines Luftfahrzeugs, umfassend mindestens ein Modul nach einem der vorstehenden Ansprüche und einen Gasgenerator (3) umfasst, der dazu bestimmt ist, den nicht ummantelten Propeller (2) in Drehung anzutreiben.

## Claims

1. A turbomachine module with longitudinal axis X, comprising an unducted propeller (2) driven in rotation about the longitudinal axis X and at least one straightener (25) comprising a plurality of unducted variable pitch stator vanes (26) extending along a radial axis Z perpendicular to the longitudinal axis X from a stationary casing, and a first system (30) for changing the pitches of the blades of the stator vanes (26) which comprises:
- at least one first control means (31) comprising a first stationary body (75) connected to the stationary casing and a first body (76) axially movable with respect to the first stationary body (75),
- at least one first connection mechanism (32) connecting each stator vane (26) to the first movable body (76) of the first control means (31), the first connection mechanism (32) comprising:
∘ a connection annulus (60), centred on the longitudinal axis, connected to the roots (28) of each stator vane and
∘ at least one lever (73) connected, on the one hand, to the connection annulus (60) and, on the other hand, to the first movable body (76) of the first control means (31), the lever (73) having an L shape with a first branch (80) and a second branch (81) comprising respectively a first and a second distal end (82), the first distal end (82) of the first branch (80) being connected in a pivot connection, with an axis parallel to the radial axis Z, and an axial rod (78) of the first movable body (76) of the first control means (31),
**characterised in that** the second distal end of the second branch (81) comprises a ball joint (87) through which passes a second hinge axis (88) parallel to the radial axis Z, carried by the connection annulus (60), the axial rod (78) of the first movable body (76) extending through an opening (64) along the longitudinal axis X defined in the connection annulus (60), the opening (64) being formed by bridges (63) connecting each other a first annular segment (61) and a second annular segment (62) of the connection annulus (60), said segments (61, 62) being concentric, coaxial and radially spaced apart.

2. The module according to the preceding claim, **characterised in that** the first connection mechanism (32) comprises a plurality of arms (65), each of which is connected to a stator vane (26) and to the connection annulus (60).

3. The module according to the preceding claim, **characterised in that** each arm (65) comprises a first end which is provided with a ball joint connection (68) passed through by a first hinge axis (69) carried by the connection annulus (60) and a second end connected to the root (28) of a stator vane (26) according to an embedded connection.

4. The module according to one of the preceding claims, **characterised in that** the lever (73) is held by a support (90) secured to the stationary casing and is pivotally connected to the support (90).

5. The module according to any of the preceding claims, **characterised in that** the first pitch change system (30) comprises two first control means (31) and two levers (73) connected respectively to the first control means (31) and to the connection annulus (60).

6. The module according to any one of the preceding claims, **characterised in that** the first pitch change system (30) is installed in an annular space (29) of an external casing (14) partly delimiting a primary duct (10) in which a primary air flow circulates.

7. The module according to the preceding claim, **characterised in that** the external casing (14) carries a splitter nose (22) and the first control means (31) are arranged at the level of the splitter nose (22).

8. The module according to any of the preceding claims, **characterised in that** the stator vanes (26) are configured to pivot between -10° and +10°.

9. The module according to any of the preceding claims, **characterised in that** the connection annulus (60) is unique.

10. The module according to any of the preceding claims, **characterised in that** the module comprises a second system (100) for changing the pitch of the movable blades of the propeller (2) which comprises:
- a second control means comprising a second body axially movable with respect to a second stationary body mounted on an internal casing (13), the movable blades (21) being mounted on a rotating casing (20) carried by the internal casing (13),
- at least one load transfer bearing comprising an internal ring connected to the second movable body and an external ring; and
- a second mechanism for connecting the external ring to the blades of the propeller.

11. The module according to the preceding claim, **characterised in that** the internal casing (13) and the external casing (14) delimit, at least partly, a primary duct (10) in which a primary air flow circulates.

12. An aircraft turbomachine (1) comprising at least one module according to any of the preceding claims and a gas generator (3) intended to drive the unducted propeller (2) in rotation.
